# EUROPEAN PATENT APPLICATION

(11) **EP 4 679 933 A1**
(43) Date of publication of application: **14.01.2026**
(21) Application number: 24777785.7
(22) Date of filing: 18.03.2024
(51) Int. Cl.: H04W 76/23

(54) **COMMUNICATION METHOD AND APPARATUS**

(30) Priority: 29.03.2023 CN 202310362797
(71) Applicant: Huawei Technologies Co., Ltd., Shenzhen, Guangdong 518129 (CN)
(72) Inventor: WU, Yizhuang, Shenzhen, Guangdong 518129 (CN); YING, Jiangwei, Shenzhen, Guangdong 518129 (CN); ZHU, Fangyuan, Shenzhen, Guangdong 518129 (CN)
(74) Representative: Gill Jennings & Every LLP
(86) International application number: PCT/CN2024/082302
(87) International publication number: WO 2024/198996

(57) **Abstract**

This application relates to the field of communication technologies, and discloses a communication method and apparatus. The method includes: A sensing network element receives restricted sensing information, where the restricted sensing information includes first area information, and the first area information indicates an area of restricted sensing. The sensing network element sends indication information to an execution object of a first sensing service or an AMF network element based on the restricted sensing information, where the indication information indicates to perform restricted processing on the first sensing service, and an area corresponding to the first sensing service overlaps the area of restricted sensing. According to the foregoing method, sensing permission can be dynamically configured, and restricted processing is performed on a sensing service based on the dynamically configured sensing permission, thereby improving sensing security.

## Description

### CROSS-REFERENCE TO RELATED APPLICATIONS

This application claims priority to Chinese Patent Application No. 202310362797.9, filed with the China National Intellectual Property Administration on March 29, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Continuous development of mobile communication technologies and continuous enhancement of air interface capabilities support mobile networks in achieving a qualitative leap from providing only simple voice, short message service message, and data services to implementing interconnection of everything. In addition, continuous innovation of information technologies brings new demands and services such as artificial intelligence, immersive experience, and digital twin, and poses higher requirements on information exchange in communication networks. In addition to improvement of conventional communication capabilities, capabilities such as computing, sensing, artificial intelligence, and security are also provided. The sensing capability is to become an important capability and feature of a future mobile communication network.

To support the sensing capability, the 3rd generation partnership project (3rd generation partnership project, 3GPP) describes use cases and potential demands of sensing services, including, for example, automated/assisted driving, uncrewed aerial vehicles, map reconstruction, smart cities, smart homes, factories, healthcare, and maritime sectors.

However, how to improve sensing security still requires further research.

### SUMMARY

This application provides a communication method and apparatus, to improve sensing security.

**According to a first aspect,** an embodiment of this application provides a communication method. The method may be applied to a sensing network element or a component (for example, a circuit or a chip) in the sensing network element. That the method is applied to the sensing network element is used as an example. In the method, the sensing network element receives restricted sensing information, where the restricted sensing information includes first area information, and the first area information indicates an area of restricted sensing; and sends indication information to an execution object of a first sensing service or an access and mobility management function network element based on the restricted sensing information, where the indication information indicates to perform restricted processing on the first sensing service, and an area corresponding to the first sensing service overlaps the area of restricted sensing.

According to the foregoing method, sensing permission can be dynamically configured, and restricted processing is performed on a sensing service based on the dynamically configured sensing permission, thereby improving sensing security.

In a possible design, the restricted sensing information further includes one or more of the following: service type information, where the service type information indicates a service type of restricted sensing; and time information, where the time information indicates a time period of restricted sensing.

In a possible design, the service type information includes an identifier of at least one service type and first information, where the first information indicates that the at least one service type is a service type of restricted sensing in a first area.

In a possible design, the service type information includes an identifier of at least one service type and first information, and the first information indicates that the at least one service type is a service type of permitted sensing in a first area.

In a possible design, the service type information includes an identifier of at least one service type, and the at least one service type is the service type of restricted sensing or a service type of permitted sensing.

In a possible design, a service type corresponding to the first sensing service belongs to the service type of restricted sensing.

In a possible design, the indication information includes one or more of the following: identification information of the first sensing service; restricted processing manner information, where the restricted processing manner information indicates to terminate the first sensing service, pause the first sensing service, or update the area corresponding to the first sensing service; the first area information; the service type information, where the service type information indicates the service type of restricted sensing; and the time information, where the time information indicates the time period of restricted sensing.

In a possible design, the method further includes: sending notification information to an initiator of the first sensing service, where the notification information is used to notify the initiator that the first sensing service is rejected.

According to the foregoing method, the notification information is sent to the initiator of the first sensing service, so that the initiator of the first sensing service can learn of an execution status of the sensing service in time.

In a possible design, the notification information includes one or more of the following: the identification information of the first sensing service; the first area information; second area information, where the second area information indicates an overlapping area between the area corresponding to the first sensing service and the area of restricted sensing; and a cause value, where the cause value indicates a cause for rejection of the first sensing service.

In a possible design, the method further includes: sending the restricted sensing information to an access network device, where the restricted sensing information is used to perform an authorization check on a sensing resource requested by a terminal device.

**According to a second aspect,** an embodiment of this application provides a communication method. The method may be applied to a PCF network element or a component (for example, a circuit or a chip) in the PCF network element. That the method is applied to the PCF network element is used as an example. In the method, the PCF network element receives restricted sensing information, where the restricted sensing information includes first area information, and the first area information indicates an area of restricted sensing; and sends the restricted sensing information to a terminal device, where the restricted sensing information is used by the terminal device to determine whether to initiate a sensing service.

According to the foregoing method, the PCF network element sends the restricted sensing information to the terminal device, so that the terminal device can be prevented from performing an end-side sensing service that does not require network control.

In a possible design, the restricted sensing information further includes one or more of the following: service type information, where the service type information indicates a service type of restricted sensing; and time information, where the time information indicates a time period of restricted sensing.

In a possible design, the service type information includes an identifier of at least one service type and first information, where the first information indicates that the at least one service type is a service type of restricted sensing in a first area.

In a possible design, the service type information includes an identifier of at least one service type and first information, and the first information indicates that the at least one service type is a service type of permitted sensing in a first area.

In a possible design, the service type information includes an identifier of at least one service type, and the at least one service type is the service type of restricted sensing or a service type of permitted sensing.

In a possible design, the method further includes: receiving capability information of the terminal device, where the capability information indicates that the terminal device supports a sensing function or that the terminal device is authorized to perform a sensing service.

According to the foregoing method, the restricted sensing information may be sent, based on the capability information of the terminal device in a targeted manner, to the terminal device that supports the sensing function or is authorized to perform a sensing service, to reduce transmission resource overheads.

In a possible design, the method further includes: receiving location information of the terminal device; and determining, based on the location information of the terminal device, to send the restricted sensing information to the terminal device.

According to the foregoing method, the restricted sensing information may be sent, based on the location information of the terminal device in a targeted manner, to the terminal device located in the area of restricted sensing (or close to the area of restricted sensing), to reduce transmission resource overheads.

**According to a third aspect,** an embodiment of this application provides a communication method. The method may be applied to a sensing network element or a component (for example, a circuit or a chip) in the sensing network element, or may be applied to an NEF network element or a component (for example, a circuit or a chip) in the NEF network element. That the method is applied to the sensing network element is used as an example. In the method, the sensing network element receives first request information, where the first request information is used to request to establish a second sensing service; obtains restricted sensing information, where the restricted sensing information includes first area information, and the first area information indicates an area of restricted sensing; and performs an authorization check on the second sensing service based on the area of restricted sensing and an area corresponding to the second sensing service.

According to the foregoing method, the sensing network element or the NEF network element may perform an authorization check on an initiated sensing service request based on restricted sensing information, to improve sensing security.

In a possible design, a fourth request message includes third area information, and the third area information indicates the area corresponding to the second sensing service.

In a possible design, performing the authorization check on the second sensing service based on the area of restricted sensing and the area corresponding to the second sensing service includes: when the area corresponding to the second sensing service is in the area of restricted sensing, rejecting establishment of the second sensing service.

In a possible design, performing the authorization check on the second sensing service based on the area of restricted sensing and the area corresponding to the second sensing service includes: when the area corresponding to the second sensing service partially overlaps the area of restricted sensing, authorizing establishment of the second sensing service.

In a possible design, the first request information includes second information, and the second information indicates that the second sensing service is supported or allowed when the area corresponding to the second sensing service partially overlaps the area of restricted sensing.

In a possible design, the restricted sensing information includes service type information, where the service type information indicates a service type of restricted sensing; and
a service type corresponding to the second sensing service belongs to the service type of restricted sensing.

In a possible design, the restricted sensing information further includes time information, where the time information indicates a time period of restricted sensing; and the fourth request information further includes execution time information, the execution time information indicates execution time of the second sensing service, and the execution time of the second sensing service is in the time period of restricted sensing.

In a possible design, obtaining the restricted sensing information includes: obtaining the restricted sensing information from a data storage network element.

**According to a fourth aspect,** an embodiment of this application provides a communication method. The method may be applied to a sensing network element or a component (for example, a circuit or a chip) in the sensing network element. That the method is applied to the sensing network element is used as an example. In the method, the sensing network element receives exposed sensing information, where the exposed sensing information includes fourth area information, and the fourth area information indicates an area of sensing exposure; and sends activation information to an access network device, where the activation information is used to request the access network device to activate a sensing function, and the access network device is located in the area of sensing exposure.

In a possible design, the exposed sensing information further includes: service type information, where the service type information indicates a service type of sensing exposure; and time information, where the time information indicates a time period of sensing exposure.

In a possible design, the activation information includes sensing configuration information, and the sensing configuration information includes frequency information used to perform a sensing operation in a third area; or the activation information includes address information, and the address information is used by the access network device to obtain sensing configuration information.

**According to a fifth aspect,** an embodiment of this application provides a communication system. The communication system includes a data storage network element and a sensing network element. The data storage network element is configured to: receive second request information from an application function network element, and store restricted sensing information, where the second request information is used to request to configure the restricted sensing information, the second request information includes the restricted sensing information, the restricted sensing information includes first area information, and the first area information indicates an area of restricted sensing. The data storage network element is further configured to send the restricted sensing information to the sensing network element, where a service area of the sensing network element overlaps a first area, or an area corresponding to a sensing service established by the sensing network element overlaps the first area. The sensing network element is further configured to receive the restricted sensing information.

Alternatively, an embodiment of this application provides a communication system. The communication system includes a network exposure function NEF network element, a data storage network element, and a sensing network element. The NEF network element is configured to: receive request information from an application function network element, where the request information is used to request to configure restricted sensing information, the request information includes first restricted sensing information, the first restricted sensing information includes area information 1, and the area information 1 indicates an area of restricted sensing; and obtain second restricted sensing information based on the first restricted sensing information, and send the second restricted sensing information to the data storage network element. The data storage network element is configured to receive and store the second restricted sensing information. Further, the second restricted sensing information includes area information 2, and the area information 2 indicates an area of restricted sensing. The NEF network element is specifically configured to convert the area information 1 to obtain the area information 2. The data storage network element is further configured to send the restricted sensing information to the sensing network element, where a service area of the sensing network element overlaps a first area, or an area corresponding to a sensing service established by the sensing network element overlaps the first area. The sensing network element is further configured to receive the restricted sensing information.

It may be understood that, configuration of the restricted sensing information is used as an example herein. The AF network element may send second request information to the data storage network element, where the second request information is used to request to configure exposed sensing information, the exposed sensing information includes fourth area information, and the fourth area information indicates an area of sensing exposure. Correspondingly, the data storage network element is configured to: receive the second request information, and store the restricted sensing information.

In a possible design, the sensing network element is further configured to send indication information to an execution object of a first sensing service or an AMF network element based on the restricted sensing information, where the indication information indicates to perform restricted processing on the first sensing service, and an area corresponding to the first sensing service overlaps the area of restricted sensing.

In a possible design, the sensing network element is further configured to send notification information to an initiator of the first sensing service, where the notification information is used to notify the initiator that the first sensing service is rejected.

In a possible design, the sensing network element is further configured to send the restricted sensing information to an access network device, where the access network device is located in the area of restricted sensing.

In a possible design, the sensing network element is further configured to: receive first request information, where the first request information is used to request to establish a second sensing service; and perform an authorization check on the second sensing service based on the restricted sensing information.

In a possible design, the sensing network element is further configured to send third request information to the data storage network element, where the third request information is used to request the restricted sensing information.

In a possible design, the communication system further includes the NEF network element. The data storage network element is further configured to send the restricted sensing information to the NEF network element. The NEF network element is configured to: receive first request information, where the first request information is used to request to establish a second sensing service; and perform an authorization check on the second sensing service based on the restricted sensing information from the data storage network element.

In a possible design, the NEF network element is further configured to send fourth request information to the data storage network element, where the fourth request information is used to request to obtain the restricted sensing information.

In a possible design, the communication system further includes a PCF network element. The data storage network element is further configured to send the restricted sensing information to the PCF network element. The PCF network element is configured to: receive the restricted sensing information, and send the restricted sensing information to a terminal device, where the restricted sensing information is used by the terminal device to determine whether to initiate a sensing service.

**According to a sixth aspect,** this application provides a communication apparatus. The communication apparatus has functions for implementing the first aspect to the fourth aspect. For example, the communication apparatus includes a corresponding module, unit, or means (means) for performing operations in the first aspect to the fourth aspect. The module, unit, or means may be implemented by software, may be implemented by hardware, or may be implemented by hardware by executing corresponding software.

In a possible design, the communication apparatus includes a processing unit and a communication unit. The communication unit may be configured to receive and send signals, to implement communication between the communication apparatus and another apparatus. The processing unit may be configured to perform some internal operations of the communication apparatus. Functions performed by the processing unit and the communication unit may correspond to the operations in the first aspect to the fourth aspect.

In a possible design, the communication apparatus includes a processor, and the processor may be configured to be coupled to a memory. The memory may store a necessary computer program or necessary instructions for implementing functions in the first aspect to the fourth aspect. The processor may execute the computer program or the instructions stored in the memory. When the computer program or the instructions are executed, the communication apparatus is enabled to implement the method in any possible design or implementation of the first aspect to the fourth aspect.

In a possible design, the communication apparatus includes a processor and a memory, and the memory may store a necessary computer program or necessary instructions for implementing functions in the first aspect to the fourth aspect. The processor may execute the computer program or the instructions stored in the memory. When the computer program or the instructions are executed, the communication apparatus is enabled to implement the method in any possible design or implementation of the first aspect to the fourth aspect.

In a possible design, the communication apparatus includes a processor and an interface circuit. The processor is configured to: communicate with another apparatus through the interface circuit, and perform the method in any possible design or implementation of the first aspect to the fourth aspect.

It may be understood that, in the sixth aspect, the processor may be implemented by hardware, or may be implemented by software. When the processor is implemented by the hardware, the processor may be a logic circuit, an integrated circuit, or the like. When the processor is implemented by the software, the processor may be a general-purpose processor, and is implemented by reading software code stored in the memory. In addition, there may be one or more processors and one or more memories. The memory may be integrated with the processor, or the memory and the processor are disposed separately. In a specific implementation process, the memory and the processor may be integrated on a same chip, or may be disposed on different chips. A type of the memory and a manner in which the memory and the processor are disposed are not limited in this embodiment of this application.

**According to a seventh aspect,** this application provides a computer-readable storage medium. The computer storage medium stores computer-readable instructions. When a computer reads and executes the computer-readable instructions, the computer is enabled to perform the method in any possible design of the first aspect to the fourth aspect.

**According to an eighth aspect,** this application provides a computer program product. When a computer reads and executes the computer program product, the computer is enabled to perform the method in any possible design of the first aspect to the fourth aspect.

**According to a ninth aspect,** this application provides a chip. The chip includes a processor. The processor is coupled to a memory, and is configured to read and execute a software program stored in the memory, to implement the method in any possible design of the first aspect to the fourth aspect.

### BRIEF DESCRIPTION OF DRAWINGS

FIG. 1 is a diagram of a network architecture to which an embodiment of this application is applicable;
FIG. 2 is a diagram of a more specific network architecture to which an embodiment of this application is applicable;
FIG. 3 is a diagram of implementation of a sensing service to which an embodiment of this application is applicable;
FIG. 4 is a schematic flowchart corresponding to a communication method according to Embodiment 1 of this application;
FIG. 5 is a schematic flowchart corresponding to a communication method according to Embodiment 2 of this application;
FIG. 6 is a schematic flowchart corresponding to a communication method according to Embodiment 3 of this application;
FIG. 7 is a schematic flowchart corresponding to a communication method according to Embodiment 4 of this application;
FIG. 8 is a schematic flowchart corresponding to a communication method according to Embodiment 5 of this application;
FIG. 9 is a possible example block diagram of an apparatus according to an embodiment of this application; and
FIG. 10 is a possible diagram of a structure of an apparatus according to an embodiment of this application.

### DESCRIPTION OF EMBODIMENTS

The following describes technical solutions in embodiments of this application with reference to accompanying drawings in embodiments of this application. All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner. In embodiments of this application, "of (of)", "corresponding (corresponding, relevant)", and "corresponding (corresponding)" may be interchangeably used sometimes. It should be noted that meanings expressed by the terms are consistent when differences are not emphasized.

The technical solutions in embodiments of this application may be applied to various communication systems, such as a universal mobile telecommunications system (universal mobile telecommunications system, UMTS), a wireless local area network (wireless local area network, WLAN), a wireless fidelity (wireless fidelity, Wi-Fi) system, a 4th generation (4th generation, 4G) communication system such as a long term evolution (long term evolution, LTE) system, a 5G communication system such as a new radio (new radio, NR) system, and a future evolved communication system such as a 6th generation (6th generation, 6G) mobile communication system.

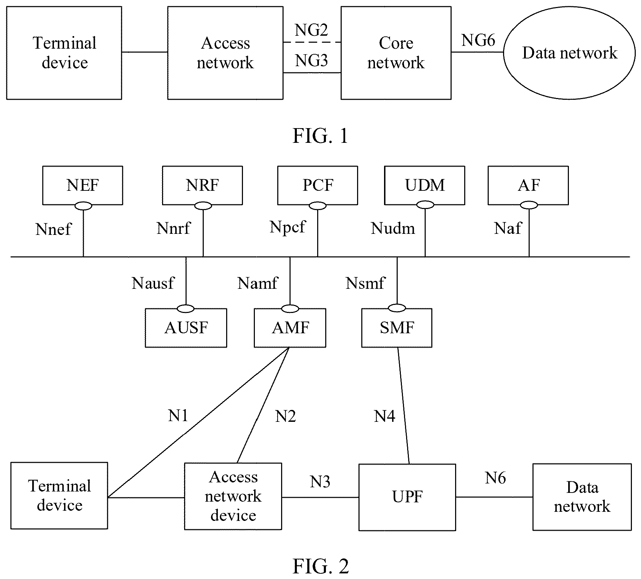

FIG. 1 is a diagram of a network architecture of a communication system to which this application is applicable. The network architecture includes four parts: a terminal device, an access network (access network, AN), a core network (core network, CN), and a data network (data network, DN). The access network may be a radio access network (radio access network, RAN).

The terminal device, the (radio) access network, and the core network are main parts of the network architecture, and each may be logically divided into two parts: a user plane and a control plane. The control plane is responsible for mobile network management, and the user plane is responsible for service data transmission. For example, as shown in FIG. 1, in a 5G communication system, a next generation (next generation, NG) 2 reference point is located between a control plane of a (radio) access network and a control plane of a core network, an NG3 reference point is located between a user plane of the (radio) access network and a user plane of the core network, and an NG6 reference point is located between the user plane of the core network and a data network.

The following describes in detail each component of the network architecture.

### (1) Terminal device

The terminal device is a device that provides voice and/or data connectivity for a user. The terminal device may also be referred to as user equipment (user equipment, UE), a terminal (terminal), an access terminal, a terminal unit, a terminal station, a mobile station (mobile station, MS), a remote station, a remote terminal, a mobile terminal (mobile terminal, MT), a wireless communication device, a terminal agent, terminal equipment, or the like.

For example, the terminal device may be a handheld device having a wireless connection function, or may be a vehicle, a vehicle-mounted device (for example, a vehicle-mounted communication apparatus or a vehicle-mounted communication chip), or the like having a communication function. Currently, some examples of the terminal device are as follows: a mobile phone (mobile phone), a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device or another processing device connected to a wireless modem, a tablet computer, a computer having a wireless transceiver function, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), and the like.

The terminal device may be deployed on land, where the deployment includes indoor or outdoor, handheld, and wearable or vehicle-mounted deployment; or may be deployed on water (for example, on a ship); or may be deployed in air (for example, on an airplane, a balloon, or a satellite). A specific technology, a device form, an application scenario, and a name that are used by the terminal device are not limited in embodiments of this application.

### (2) Access network

The (radio) access network is deployed near the terminal device, provides a network access function for an authorized user in a specific area, and can determine transmission tunnels of different quality based on user levels, service requirements, and the like to implement transmission of user data. The (radio) access network can manage and properly use resources of the (radio) access network, provide an access service for the terminal device as required, and is responsible for forwarding a control signal and service data between the terminal device and the core network.

A (radio) access network device is deployed in the (radio) access network, and is configured to connect the terminal device to a wireless network. The (radio) access network device may be generally connected to the core network through a wired link (for example, an optical fiber cable). The (radio) access network device may also be referred to as a RAN device/node, or a base station.

For example, the (radio) access network device may include a base station, an evolved NodeB (evolved NodeB, eNodeB) in an LTE system or an LTE-advanced (LTE-Advanced, LTE-A) system, a next generation NodeB (next generation NodeB, gNB) in a 5G communication system, a transmission reception point (transmission reception point, TRP), a baseband unit (baseband unit, BBU), an access point (access point, AP) in a wireless local area network (wireless local area network, WLAN), an integrated access and backhaul (integrated access and backhaul, IAB) node, a base station in a future mobile communication system, an access node in a Wi-Fi system, or the like. The radio access network device may alternatively be a module or unit that implements some functions of the base station, for example, a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna processing unit (active antenna unit, AAU), or a remote radio head (remote radio head, RRH).

The (radio) access network device may be deployed on land, where the deployment includes indoor or outdoor, handheld, and wearable or vehicle-mounted deployment; or may be deployed on water (for example, on a ship); or may be deployed in air (for example, on an airplane, a balloon, or a satellite). A specific technology, a device form, an application scenario, and a name that are used by the (radio) access network device are not limited in embodiments of this application. In embodiments of this application, the (radio) access network device may be referred to as an access network (AN) device for short. Unless otherwise specified, all access network devices in the following descriptions may be (radio) access network devices.

### (3) Core network

The core network is responsible for maintaining subscription data of a mobile network, managing a network element of the mobile network, and providing functions such as session management, mobility management, policy management, and security authentication for the terminal device.

Specific content may include: The core network provides network access authentication for the terminal device when the terminal device attaches; allocates a network resource to the terminal device when the terminal device has a service request; updates a network resource for the terminal device when the terminal device moves; provides a fast recovery mechanism for the terminal device when the terminal device is idle; releases a network resource for the terminal device when the terminal device detaches; and provides a data routing function for the terminal device when the terminal device has service data, for example, forwards uplink data to the data network, or receives downlink data from the data network and forwards the downlink data to the (radio) access network, to send the data to the terminal device.

### (4) Data network

The data network is configured to provide a service for the user. In an actual communication process, a client is usually located on the terminal device, and a server is usually located in the data network. The data network may be a private network, for example, a local area network, may be an external network that is not managed and controlled by an operator, for example, the internet (Internet), or may be a dedicated network jointly deployed by operators, for example, a network that provides an IP multimedia network subsystem (IP multimedia core network subsystem, IMS) service.

**FIG. 2** is a diagram of a more specific network architecture to which an embodiment of this application is applicable. The network architecture may be a network architecture of a 5G communication system. As shown in FIG. 2, the network architecture includes a terminal device, an access network device, various types of core network elements/functional entities, and a data network.

A user plane of a core network includes a user plane function (user plane function, UPF). A control plane of the core network includes but is not limited to: an access and mobility management function (access and mobility management function, AMF) network element, a session management function (session management function, SMF) network element, an authentication server function (authentication server function, AUSF) network element, a network exposure function (network exposure function, NEF) network element, a network function repository function (network function repository function, NRF) network element, a policy control function (policy control function, PCF) network element, a data storage network element, and an application function (application function, AF) network element.

The UPF network element is mainly responsible for connecting to an external network, and forwarding a user data packet according to a routing rule of the SMF network element, for example, sending uplink data to the data network or another UPF network element, and sending downlink data to another UPF network element or the access network device.

The AMF network element is mainly responsible for access management and mobility management of the terminal device, for example, is responsible for status maintenance of the terminal device, reachability management of the terminal device, forwarding of a mobility management non-access-stratum (mobility management non-access-stratum, MM NAS) message, and forwarding of a session management (session management, SM) N2 message.

The SMF network element is mainly responsible for session management in a mobile network, including establishing a session for the terminal device, and allocating and releasing resources for the session. The resource includes session quality of service (quality of service, QoS), a session path, a forwarding rule, and the like. For example, the SMF network element is responsible for allocating an internet protocol (internet protocol, IP) address to the terminal device or selecting a UPF network element that provides a packet forwarding function.

The AUSF network element is mainly responsible for performing security authentication on the terminal device.

The NEF network element is used for connection and interaction between another internal network element of the core network and an external application server of the core network, to provide network capability information for the external application server, or provide information of the external application server for a core network element.

The NRF network element is mainly responsible for providing functions of storing and selecting network functional entity information for another network element.

The PCF network element is mainly responsible for user policy management, including policy authorization, quality of service, and generation of a charging rule, and delivering a corresponding rule to the UPF network element via the SMF network element, to complete installation of a corresponding policy and rule.

The data storage network element is mainly responsible for managing and controlling data. For example, the data storage network element may be a unified data management (unified data management, UDM) network element and/or a unified data repository (unified data repository, UDR) network element. The UDM network element may manage subscription information of a user, including obtaining the subscription information and providing the subscription information for another network element (for example, the AMF network element); generate a 3GPP authentication credential for the terminal device; and register and maintain a network element currently serving the terminal device (for example, an AMF represented by an AMF ID 1 is a current serving AMF of the terminal device, that is, a serving AMF). A function of the UDM network element may be implemented by interacting with the UDR network element. The UDR network element is configured to store data required when the UDM network element performs an operation of the UDM network element. During actual implementation, the UDM network element and the UDR network element may be two independent physical entities, or the UDR network element may be integrated into the UDM network element. This is not limited. For another example, the data storage network element may alternatively be a network element newly introduced in embodiments of this application, and is configured to manage and control sensing-related data.

In the following descriptions in embodiments of this application, an example in which the data storage network element is the UDM network element and the UDR network element is used for description. In other words, a "UDR network element" or a "UDM network element" in the following descriptions may be replaced with a "data storage network element" or another possible name.

The AF network element is mainly responsible for providing service data of various applications for a control plane network element in a communication network of an operator, or obtaining data information and control information of the network from the control plane network element in the communication network.

Although not shown, the network architecture may further include another possible network element, for example, an operation, administration and maintenance (operation, administration and maintenance, OAM) network element.

It may be understood that in FIG. 2, an example in which the control plane of the core network uses a service-based architecture is used for illustration. In the service-based architecture, each control plane network element is connected to a service bus, and interaction between control plane network elements is performed in a service invoking manner, that is, a control plane network element exposes a service to another control plane network element for invoking by the another control plane network element. In another possible implementation, the control plane of the core network may alternatively use a point-to-point communication manner. In point-to-point communication, there is a set of specific messages in a communication interface between control plane network elements. An interface between the terminal device and the AMF network element is referred to as an N1 interface, an interface between the access network device and the AMF network element is referred to as an N2 interface, an interface between the access network device and the UPF network element is referred to as an N3 interface, an interface between the UPF network element and the SMF network element may be referred to as an N4 interface, and an interface between the UPF network element and the data network is referred to as an N6 interface. Certainly, in a future communication system, names of these interfaces may be unchanged, or may be replaced with other names. This is not limited in this application. In the future communication system, for example, a 6th generation (6th generation, 6G) communication system, the foregoing network element or device may still use a name of the network element or device in a 4th generation (4th generation, 4G) or 5G communication system, or have another name. A function of the network element or the device may be completed by one independent network element, or may be jointly completed by several network elements. This is not limited in embodiments of this application.

The various possible network elements/functional entities in the network architecture may be network elements in a hardware device, may be software functions running on dedicated hardware, or may be virtualized functions instantiated on a platform (for example, a cloud platform). Optionally, the network elements or functional entities may be implemented by one device, may be jointly implemented by a plurality of devices, or may be implemented by different functional modules in one device. This is not specifically limited in embodiments of this application. During actual deployment, the network elements may be co-located. For example, the access and mobility management function network element may be co-located with the session management function network element. The session management function network element may be co-located with the user plane function network element. When two network elements are co-located, interaction between the two network elements provided in embodiments of this application becomes an internal operation of the co-located network element or may be omitted.

The network architecture and a service scenario described in embodiments of this application are intended to describe the technical solutions of embodiments of this application more clearly, and do not constitute a limitation on the technical solutions provided in embodiments of this application. A person of ordinary skill in the art may know: With evolution of the communication system architecture and emergence of new service scenarios, the technical solutions provided in embodiments of this application are also applicable to similar technical problems.

The following uses network elements in a 5G communication system as an example to describe specific solution details. A core network (or an operator network) in embodiments of this application may further include a sensing function (sensing function, SF) network element (referred to as a sensing network element for short), and the sensing network element may perform wireless sensing by using an access network device and/or a terminal device. The sensing network element may be co-located with another network element, a function of the sensing network element may be specifically implemented by another network element, or the sensing network element may be separately set. This is not limited in embodiments of this application. The sensing network element may also be referred to as a sensing control network element (sensing control function, SCF) or may have another possible name. Optionally, the sensing network element may alternatively be deployed in a non-core network. This is not limited in embodiments of this application.

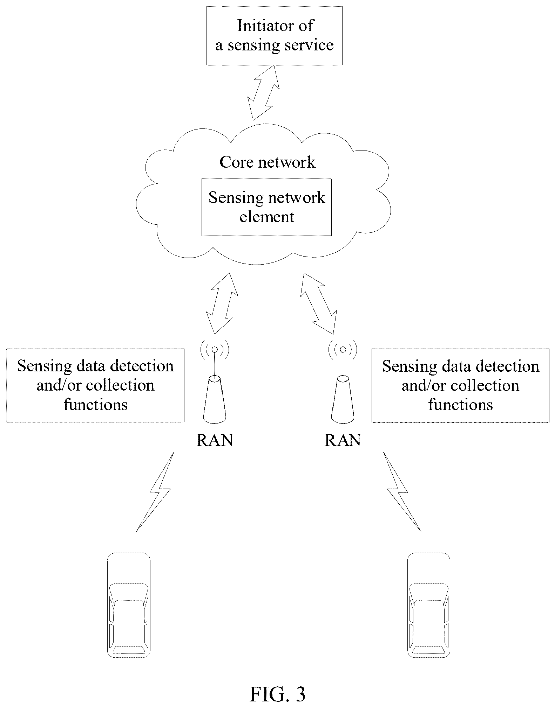

As shown in **FIG. 3****,** the sensing network element may obtain a sensing requirement from an initiator (or a demander) of a sensing service. The initiator of the sensing service may be an AF network element, an external application server (application server, AS), or a terminal device. After obtaining the sensing requirement, the sensing network element may control an execution object of the sensing service to detect and/or collect sensing data. The execution object of the sensing service may include one or more access network devices and/or one or more terminal devices.

That the execution object is an access network device is used as an example. The access network device may perform a sensing operation to obtain sensing data. For example, the sensing operation may include sending a sensing signal and receiving an echo signal. The sensing signal is a signal used to sense (or detect) a to-be-sensed target (or referred to as a target object). The sensing signal is also referred to as a sounding signal, a linear frequency modulation signal, a radar signal, a radar sensing signal, a radar sounding signal, an environment sensing signal, or the like. The echo signal is a reflected signal of the target object for the sensing signal. For example, the access network device may perform specific processing based on the echo signal to generate (or determine or obtain) the sensing data. After obtaining the sensing data through detection, the access network device may send the sensing data to the sensing network element. The sensing network element processes the sensing data to obtain a sensing result, and provides the sensing result for the initiator of the sensing service. For example, the sensing network element may process the sensing data based on the sensing requirement of the initiator of the sensing service, to obtain the sensing result.

The access network device may provide the sensing data for the sensing network element in a plurality of manners. In a possible implementation, the sensing network element may establish a sensing data transmission channel for the access network device, so that the access network device may send the sensing data to the sensing network element on the sensing data transmission channel. Further, the sensing network element obtains the sensing result after processing the sensing data based on the sensing requirement, and sends the sensing result to the initiator of the sensing service. For example, the sensing data transmission channel may include a channel between the access network device and a UPF network element, a channel between the UPF network element and the sensing network element, and a channel between the sensing network element and the initiator of the sensing service. In other words, a transmission path of the sensing data is: the access network device (sensing data) → the UPF network element (sensing data) → the sensing network element (sensing result obtained based on the sensing data) → the initiator of the sensing service (sensing result). In the foregoing transmission path, another possible network element may be further included between the sensing network element and the initiator of the sensing service. This is not specifically limited. In embodiments of this application, a specific implementation of establishing the sensing data transmission channel is not limited, and "channel" may alternatively be replaced with "tunnel" or another possible name.

It may be understood that the sensing network element in the transmission path may be replaced with a sensing data processing function network element, in other words, the sensing data processing function network element may convert the sensing data into the sensing result that can be sent to the initiator of the sensing service. Specifically, the sensing network element may establish a sensing data transmission channel for the access network device, so that the access network device may send the sensing data to the sensing data processing function network element. Further, the sensing data processing function network element obtains the sensing result after processing the sensing data based on the sensing requirement, and sends the sensing result to the initiator of the sensing service. In other words, a transmission path of the sensing data is: the access network device (sensing data) → the UPF network element (sensing data) → the sensing data processing function network element (sensing result obtained based on the sensing data) → the initiator of the sensing service (sensing result).

For example, communication methods provided in embodiments of this application may be summarized into the following three aspects: In a first aspect, restricted sensing information is configured; in a second aspect, based on the restricted sensing information, restricted processing is performed on a sensing service that is being performed, and an authorization check is performed on a sensing service to be performed in the future; and in a third aspect, exposed sensing information is configured. The communication methods in the foregoing three aspects may be separately implemented, or may be flexibly combined for implementation. For example, only the first aspect may be implemented, or the first aspect and the second aspect may be implemented. Details are not described herein. It may be understood that the "restricted sensing information" in embodiments of this application may indicate that a corresponding sensing service is prohibited. Optionally, "prohibition" herein may alternatively be replaced with another restricted processing manner, for example, suspension, pausing, execution after verification, deferral, or updating. This is not limited in this application. The following describes solutions in embodiments of this application by using prohibition as an example. For example, that the corresponding sensing service is prohibited may be that sensing services of all service types are prohibited in a specific area, or a sensing service of a specific service type is prohibited. The specific area may be referred to as an area of restricted sensing, and the prohibited service type may be referred to as a service type of restricted sensing. The "exposed sensing information" in embodiments of this application means that a corresponding sensing service is exposed. Optionally, "expose" herein may be understood as an action having an opposite effect to the foregoing "prohibit". For example, that the corresponding sensing service is exposed may be that sensing services of all service types are exposed in a specific area, or a sensing service of a specific service type is exposed. The specific area may be referred to as an area of sensing exposure, and the exposed service type may be referred to as a service type of sensing exposure.

The following describes in detail, with reference to specific embodiments, the communication method provided in embodiments of this application.

### Embodiment 1

In Embodiment 1, a possible implementation of configuring the restricted sensing information in the first aspect is described.

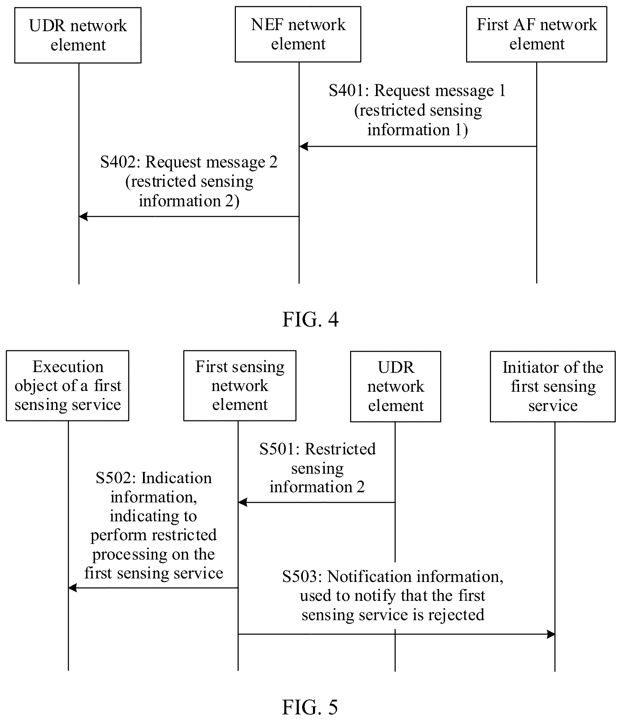

**FIG. 4** is a schematic flowchart corresponding to a communication method according to Embodiment 1 of this application. As shown in FIG. 4, the method includes the following steps.

**S401:** A first AF network element sends a request message 1 to an NEF network element, where the request message 1 includes restricted sensing information 1; and correspondingly, the NEF network element receives the request message 1.

For example, for areas for which sensing permission is not set, when it is determined that sensing permission needs to be set for these areas, the first AF network element may send the request message 1 to the NEF network element. The request message 1 may also be referred to as a restricted sensing configuration request.

The restricted sensing information 1 may indicate an area of restricted sensing. Optionally, the restricted sensing information 1 further indicates a service type of restricted sensing. For example, when the restricted sensing information 1 indicates the area of restricted sensing but does not indicate the service type of restricted sensing, it indicates that sensing services of all service types are prohibited in the area of restricted sensing; and when the restricted sensing information 1 indicates the area of restricted sensing and the service type of restricted sensing, it indicates that a sensing service of a specific service type is prohibited in the area of restricted sensing (in other words, sensing services of some service types are prohibited in the area of restricted sensing).

In addition, the restricted sensing information 1 may further indicate a time period of restricted sensing. For example, when the restricted sensing information 1 indicates the area of restricted sensing and the time period of restricted sensing, it indicates that the sensing services of all the service types are prohibited in the area of restricted sensing in the time period; and when the restricted sensing information 1 indicates the area of restricted sensing, the service type of restricted sensing, and the time period of restricted sensing, it indicates that the sensing service of the specific service type is prohibited in the area of restricted sensing in the time period.

There are a plurality of indication manners in which the restricted sensing information 1 indicates the area of restricted sensing, the service type of restricted sensing, or the time period of restricted sensing. For example, the restricted sensing information 1 includes area information 1, type information, or time information. Optionally, the restricted sensing information 1 may further include other information used to specifically limit sensing, for example, service requirement information (for example, precision information, used to limit sensing precision).
**(1)** The area information 1 indicates the area of restricted sensing. For example, the area information 1 may include geographical location information (for example, information such as latitude, longitude, and altitude), or may include information used by an operator network to identify the area, for example, cell information and tracking area information.
**(2)** The type information indicates the service type of restricted sensing. For example, the type information may include an identifier of at least one service type. For example, the at least one service type may include one or more of maps, driving, object distribution, or violation detection. Optionally, the type information further includes first information. The first information may indicate that the at least one service type is a service type of restricted sensing. In this case, the identifier that is of the at least one service type and that is included in the type information may be understood as a blocklist of restricted sensing. Alternatively, the first information may indicate that the at least one service type is a service type of permitted sensing. In this case, the identifier that is of the at least one service type and that is included in the type information may be understood as a trustlist of restricted sensing. In addition, when the type information does not include the first information, the at least one service type may be considered by default as a service type of restricted sensing or a service type of permitted sensing.
   Alternatively, in another possible embodiment, the type information includes a first set and a second set, the first set includes an identifier of at least one service type, the second set also includes an identifier of at least one service type, and the identifier that is of the service type and that is included in the first set does not overlap the identifier that is of the service type and that is included in the second set. The first set may be a trustlist of restricted sensing, and the second set may be a blocklist of restricted sensing. Optionally, the type information further includes information a corresponding to the first set and information b corresponding to the second set, where the information a indicates that the first set is a trustlist of restricted sensing, and the information b indicates that the second set is a blocklist of restricted sensing.
   It may be understood that the foregoing descriptions about the type information are merely an example, and a specific implementation of indicating the service type of restricted sensing is not limited in this embodiment of this application.
**(3)** The time information indicates the time period of restricted sensing, and the time period of restricted sensing may also be understood as time validity of restricted sensing (or time validity of a restricted sensing configuration). In an example, the time information may include effective time and expiration time of restricted sensing, where the effective time of restricted sensing is start time of the time period of restricted sensing, and the expiration time of restricted sensing is end time of the time period of restricted sensing; or the time information may include one of effective time and expiration time, and further include duration of restricted sensing. In another example, the time information may include expiration time. In this case, effective time may be receiving time of the restricted sensing information by default.

Optionally, in addition to the restricted sensing information 1, the request message 1 further includes other possible information, for example, further includes an identifier of the first AF network element, so that the NEF network element learns of a network element that initiates the restricted sensing configuration request.

**S402:** The NEF network element sends a request message 2 to a UDR network element based on the request message 1, where the request message 2 includes restricted sensing information 2; and correspondingly, the UDR network element receives the request message 2.

Optionally, after receiving the request message 2, the UDR stores the restricted sensing information 2.

For example, the request message 2 may be a Nudr_parameterProvision create request message.

Content included in the restricted sensing information 2 may be the same as content included in the restricted sensing information 1. Alternatively, content included in the restricted sensing information 2 is determined based on content included in the restricted sensing information 1. For example, the restricted sensing information 1 includes the area information 1, and restricted sensing information 2 includes area information 2. If the area information 1 includes the geographical location information, the NEF network element may convert the area information 1 into the area information 2, where the area information 2 includes information used by the operator network to identify an area. A range corresponding to the area information 2 may be the same as a range corresponding to the area information 1, or a range corresponding to the area information 2 may be slightly greater than a range corresponding to the area information 1.

Optionally, after receiving the request message 1, the NEF network element may first perform an authorization check, and send the request message 2 to the UDR network element after the authorization check succeeds. That the NEF network element performs the authorization check may be as follows: The NEF network element checks, according to a local policy, whether the first AF network element is authorized to serve as an entity for initiating the restricted sensing configuration request. Alternatively, the NEF network element obtains authorization check information from a UDM network element (or another network element, for example, a network element configured to manage the authorization check information), and checks, based on the authorization check information, whether the first AF network element is authorized to serve as an entity for initiating the restricted sensing configuration request.

Optionally, after receiving the request message 2, the UDR network element may further perform an authorization check according to a local policy, for example, check, according to the local policy, the restricted sensing information requested by the restricted sensing configuration request. The authorization check performed by the NEF may be understood as a coarse-grained authorization check, and the authorization check performed by the UDR network element may be understood as a fine-grained authorization check.

Optionally, the UDR network element may send a response message (which, for example, may be referred to as a Nudr_parameterProvision create response message) to the NEF network element. Correspondingly, after receiving the response message, the NEF network element may send a restricted sensing configuration response to the first AF network element.

It may be understood that:
**(1)** The foregoing is described by using an example in which the NEF network element performs area conversion (that is, the NEF network element converts the area information 1 into the area information 2). In another possible implementation, another network element (for example, the UDR network element) may perform area conversion. This is not specifically limited.
**(2)** The foregoing is described by using an example in which the first AF network element sends the restricted sensing information to the UDR network element through the NEF network element. In another possible implementation, the first AF network element may alternatively directly send the restricted sensing information to the UDR network element.

According to the foregoing method, the first AF network element may flexibly and dynamically set sensing permission for a sensitive area based on an actual requirement, to improve sensing security.

### Embodiment 2

In Embodiment 2, some possible implementations of the restricted processing in the second aspect are described.

**FIG. 5** is a schematic flowchart corresponding to a communication method according to Embodiment 2 of this application. As shown in FIG. 5, the method includes the following steps.

**S501:** A UDR network element sends restricted sensing information 2 to a first sensing network element; and correspondingly, the first sensing network element receives the restricted sensing information 2.

For example, the UDR network element may send the restricted sensing information 2 to the first sensing network element by using a Nudr_DM_notification message.

For example, for content included in the restricted sensing information 2, refer to the descriptions in Embodiment 1. The restricted sensing information 2 may be configured for the UDR network element in the manner in Embodiment 1, or may be configured for the UDR network element in another possible manner. This is not specifically limited.

For example, the UDR network element may send the restricted sensing information 2 to at least one sensing network element, and the at least one sensing network element includes the first sensing network element. The first sensing network element is used as an example for description herein. The following describes three possible implementations.

### (1) Manner 1

The UDR network element may obtain areas corresponding to sensing services established by a plurality of sensing network elements, and determine whether the areas corresponding to the sensing services (that is, sensing services being performed on the plurality of sensing network elements) established by the plurality of sensing network elements overlap an area of restricted sensing. For example, if an area corresponding to a sensing service established by the first sensing network element overlaps the area of restricted sensing, the UDR network element may send the restricted sensing information 2 to the first sensing network element.

There are a plurality of manners in which the UDR network element obtains the areas corresponding to the sensing services established by the plurality of sensing network elements. For example, one of the plurality of sensing network elements is used as an example, and after establishing a sensing service initiated by an initiator of the sensing service, the sensing network element may register sensing network element service information with the UDR network element, so that the UDR network element may notify the sensing network element of a change in information related to the sensing service. The sensing network element service information may include an identifier of the sensing network element and area information corresponding to the sensing service established by the sensing network element. The area information corresponding to the sensing service indicates an area corresponding to the sensing service. It may also be understood as that the sensing network element service information is used to notify the UDR network element that a sensing service is being performed on the area (that is, object information in the area is being obtained), or a sensing service exists in the area. Further, the UDR network element may obtain, based on the sensing network element service information, the area corresponding to the sensing service established by the sensing network element.

Optionally, the sensing network element service information may further include other possible information, for example, a service type corresponding to the sensing service established by the sensing network element. For example, when the sensing service information further includes the service type corresponding to the sensing service established by the sensing network element, the UDR network element may further determine, based on the service type corresponding to the sensing service established by the sensing network element, whether to send the restricted sensing information 2 to the sensing network element. For example, the UDR network element may first determine a plurality of candidate sensing network elements based on the areas corresponding to the sensing services established by the plurality of sensing network elements and the area of restricted sensing, where areas corresponding to sensing services established by the candidate sensing network elements overlap the area of restricted sensing. Then, the UDR network element determines whether service types corresponding to the sensing services established by the plurality of candidate sensing network elements belongs to a service type of restricted sensing. For example, if the plurality of candidate sensing network elements include the first sensing network element, and a service type corresponding to the sensing service established by the first sensing network element belongs to the service type of restricted sensing, the UDR network element may send the restricted sensing information 2 to the first sensing network element.

### (2) Manner 2

The UDR network element may obtain service areas of a plurality of sensing network elements, and determine whether the service areas of the plurality of sensing network elements overlap an area of restricted sensing. For example, if a service area of the first sensing network element overlaps the area of restricted sensing, the UDR network element may send the restricted sensing information 2 to the first sensing network element. The service area of the sensing network element may also be understood as an area managed by the sensing network element, and different sensing network elements may manage different areas.

There are a plurality of manners in which the UDR network element obtains the service areas of the plurality of sensing network elements. For example, the UDR network element sends a request message 3 to an NRF network element, where the request message 3 includes network element type information, the network element type information indicates a sensing network element, and the request message 3 is used to request the service areas of the sensing network elements. Correspondingly, after receiving the request message 3, the NRF network element may send a response message 3 to the UDR network element, where the response message 3 includes service area information of the plurality of sensing network elements. Further, the UDR network element may determine the service areas of the plurality of sensing network elements based on the service area information of the plurality of sensing network elements.

### (3) Manner 3

The UDR network element sends a request message 4 to an NRF network element, where the request message 4 includes network element type information and area information 2, the network element type information indicates a sensing network element, and the request message 4 is used to request a sensing network element whose service area overlaps an area indicated by the area information 2. Correspondingly, after receiving the request message 4, the NRF network element may select, based on service area information that is of a plurality of sensing network elements and that is stored in the NRF network element, the sensing network element (for example, the first sensing network element) whose service area overlaps the area indicated by the area information 2, and sends a response message 4 to the UDR network element, where the response message 4 includes an identifier of the first sensing network element. Further, the UDR network element may send the restricted sensing information 2 to the first sensing network element based on the identifier of the first sensing network element.

It may be understood that the UDR network element may send the restricted sensing information 2 to at least one sensing network element in any one of the foregoing three manners, that is, the three manners may be separately and independently implemented. Alternatively, the foregoing three manners may be implemented in combination. For example, for a sensing network element 1, if the sensing network element 1 registers sensing network element information with the UDR network element, the UDR network element may determine, in the manner 1, whether to send the restricted sensing information 2 to the sensing network element 1; and for a sensing network element 2, if the sensing network element 2 does not register sensing network element information with the UDR network element, the UDR network element may determine, in the manner 2 or the manner 3, whether to send the restricted sensing information 2 to the sensing network element 2.

**S502:** The first sensing network element sends indication information to an execution object of a first sensing service based on the restricted sensing information 2, where the indication information indicates to perform restricted processing on the first sensing service, and an area corresponding to the first sensing service overlaps the area of restricted sensing.
**(1)** A case in which the first sensing network element is triggered to send the indication information is described.

**In a possible implementation,** the first sensing network element may determine, based on the restricted sensing information 2, which sensing services in a plurality of sensing services being performed on the first sensing network element are affected. For example, the first sensing service is affected. In this case, the first sensing network element may send the indication information to the execution object of the first sensing service. For example, the restricted sensing information 2 indicates the area of restricted sensing. If an area corresponding to the first sensing service overlaps the area of restricted sensing, the first sensing network element may determine that the first sensing service is an affected sensing service. For another example, the restricted sensing information 2 indicates the area of restricted sensing and the service type of restricted sensing. In this case, if the area corresponding to the first sensing service overlaps the area of restricted sensing, and a service type corresponding to the first sensing service belongs to the service type of restricted sensing, the first sensing network element may determine that the first sensing service is an affected sensing service.

It may be understood that if the first sensing network element determines that all of the plurality of sensing services being performed on the first sensing network element are not affected, the first sensing network element does not need to send the indication information.

**In another possible implementation,** the first sensing network element may directly send the indication information to execution objects of a plurality of sensing services without determining which sensing services are affected. Further, the execution objects of the plurality of sensing services autonomously determine the affected sensing services.

In addition, if the restricted sensing information 2 indicates a time period of restricted sensing, the first sensing network element may send the indication information to the execution object of the first sensing service at a first time point. The first time point is determined based on start time of the time period of restricted sensing. For example, the first time point may be the start time of the time period of restricted sensing. In other words, the first sensing network element may send the indication information to the execution object of the first sensing service after a restricted sensing configuration starts to take effect. Alternatively, the first sensing network element may directly send the indication information (the indication information carries time information) to the execution object of the first sensing service, so that the execution object of the first sensing service autonomously determines effective time and/or expiration time of a restricted sensing configuration.

**(2)** The indication information is described.

For example, the indication information may include one or more of the following:
- an identifier of the first sensing service, where an association identifier (referred to as a first identifier for ease of differentiation) may be maintained between the first sensing network element and the execution object of the first sensing service for the first sensing service, and the association identifier is the identifier of the first sensing service; and the identifier may be allocated by the first sensing network element, or may be allocated by another network element or device, which is not specifically limited;
- restricted processing manner information, where the restricted processing manner information indicates a restricted processing manner for a sensing service, and the restricted processing manner may include: termination, pausing, or updating, where "termination" may mean sending a task release request or termination request to an execution object directly or by indicating another network element, so that the execution object stops the sensing service and deletes corresponding task context information; "pausing" may mean sending a task suspension request or a service pause request to an execution object directly or by indicating another network element, so that the execution object pauses the sensing service and retains task context information; and "updating" may mean sending a task update request or a service update request to an execution object directly or by indicating another network element, so that the execution object updates the sensing service, for example, updates an area corresponding to the sensing service;
- area information 3, where the area information 3 indicates the area of restricted sensing, or indicates an overlapping area between the area of restricted sensing and the area corresponding to the first sensing service;
- service type information, where the service type information indicates the service type of restricted sensing (that is, service type information in the restricted sensing information); and
- time information, where the time information indicates the time period of restricted sensing (that is, time information in the restricted sensing information).

The following describes in detail the indication information with reference to several possible examples.

### (2.1) Example 1

It is assumed that the restricted sensing information 2 indicates only the area of restricted sensing. In this case, after determining that the first sensing service is affected, the first sensing network element may send the indication information to the execution object of the first sensing network element. That the indication information indicates to perform restricted processing on the first sensing service may mean that the indication information indicates to terminate the first sensing service. For example, when the area corresponding to the first sensing service is in the area of restricted sensing (that is, the area of restricted sensing covers the area corresponding to the first sensing service), the first sensing network element may indicate the execution object of the first service to terminate the first sensing service. In this case, the indication information may include the identifier of the first sensing service and the restricted processing manner information (indicating that the restricted processing manner is termination).

**Alternatively,** that the indication information indicates to perform restricted processing on the first sensing service may mean that the indication information indicates to update the area corresponding to the first sensing service. For example, when the area corresponding to the first sensing network element partially overlaps the area of restricted sensing (for example, the area corresponding to the first sensing service includes an area a and an area b, the area a is in the area of restricted sensing, and the area b is outside the area of restricted sensing), the first sensing network element may indicate the execution object of the first sensing service to update the area corresponding to the first sensing service (for example, update the area corresponding to the first sensing service to the area b). In this case, the indication information may include the identifier of the first sensing service, the restricted processing manner information (indicating that the restricted processing manner is updating), and the area information 3.

The area information 3 may be the same as the area information 2, that is, the area information 3 indicates the area of restricted sensing. In this way, after receiving the indication information, the execution object of the first sensing service may update, based on an overlapping status between the area of restricted sensing and the area corresponding to the first sensing service, the area corresponding to the first sensing service. Alternatively, the area information 3 indicates the area a or the area b. To be specific, based on an overlapping status between the area of restricted sensing and the area corresponding to the first sensing service, the sensing network element may indicate an overlapping area (that is, the area a) to the execution object of the first sensing service, or indicate a non-overlapping area (that is, the area b) to the execution object of the first sensing service, so that the execution object of the first sensing service updates the area corresponding to the first sensing service.

### (2.2) Example 2

It is assumed that the restricted sensing information 2 indicates the area of restricted sensing, the service type of restricted sensing, and the time period of restricted sensing, the first sensing network element does not determine which sensing services are affected, but directly sends the indication information to the execution objects of the plurality of sensing services. In this case, the indication information may include the area information 3 (indicating the area of restricted sensing), the service type information, the time information, and the restricted processing manner information ("indicating that the restricted processing manner is termination" is used herein as an example). Correspondingly, after receiving the indication information, the execution object of the first sensing service may determine whether the area of the first sensing service that is currently being performed overlaps the area of restricted sensing, and whether the service type corresponding to the first sensing service belongs to the service type of restricted sensing. If a determining result is yes, the execution object of the first sensing service may terminate the first sensing service in the time period of restricted sensing.

**(3)** A manner in which the first sensing network element sends the indication information to the execution object of the first sensing service is described.

For example, the execution object of the first sensing service may include one or more access network devices and/or one or more terminal devices.

For the access network device, the first sensing network element may directly send the indication information to the access network device (for example, there is an interface between the first sensing network element and the access network device). Alternatively, the first sensing network element may send the indication information to the access network device through another possible network element (for example, an AMF network element). For example, the first sensing network element may not sense the access network device (that is, the first sensing network element does not know which specific access network devices are performing the first sensing service). After the first sensing network element sends the indication information to the AMF network element, the AMF network element may determine which specific access network devices are performing the first sensing service, and forward the indication information to these access network devices.

For the terminal device, the first sensing network element may directly send the indication information to the terminal device (for example, there is an interface between the first sensing network element and the terminal device). Alternatively, the first sensing network element may send the indication information to the terminal device through another possible network element (for example, the AMF network element or the access network device). For example, the first sensing network element may not sense the terminal device (that is, the first sensing network element does not know which specific terminal devices are performing the first sensing service). After the first sensing network element sends the indication information to the AMF network element, the AMF network element may determine which specific terminal devices are performing the first sensing service, and forward the indication information to these terminal devices through the access network device.

It may be understood that when forwarding the indication information, the AMF network element may perform some possible processing on the indication information, or may not perform processing on the indication information. This is not limited in this embodiment of this application.

**S503:** The first sensing network element sends notification information to an initiator of the first sensing service, where the notification information is used to notify that the first sensing service is rejected.

For example, the first sensing network element may send the notification information to the initiator of the first sensing service after indicating the execution object of the first sensing service to perform restricted processing on the first sensing service, that is, may perform S503 after S502. Alternatively, this may not be limited thereto, that is, S503 does not depend on S502.
**(1) In a possible implementation,** that the notification information is used to notify that the first sensing service is rejected may mean that the notification information is used to notify that the first sensing service is terminated. For example, if the area corresponding to the first sensing service is in the area of restricted sensing, and the first sensing network element indicates the execution object of the first service to terminate the first sensing service, the notification information sent by the first sensing network element may be used to notify that the first sensing service is terminated.
   In this case, the notification information may include one or more of the following:
   - identification information of the first sensing service, where an association identifier (referred to as a second identifier for ease of differentiation) may be maintained between the first sensing network element and the initiator of the first sensing service for the first sensing service, and the association identifier is the identifier of the first sensing service; the identifier may be allocated by the first sensing network element, may be allocated by the initiator of the first sensing service, or may be allocated by both the first sensing network element and the initiator of the first sensing service, which is not specifically limited; and the second identifier may be the same as or different from the first identifier;
   - the area information 3, where the area information 3 indicates the area of restricted sensing, so that the initiator of the first sensing service may learn of the area of restricted sensing based on the area information 3; and
   - a cause value, where the cause value indicates a cause for termination of the first sensing service, where for example, the cause for termination is that the area corresponding to the first sensing network element is in the area of restricted sensing.
**(2) In another possible implementation,** that the notification information is used to notify that the first sensing service is rejected may mean that the notification information is used to notify that the first sensing service is terminated in some areas. For example, if the area corresponding to the first sensing network element partially overlaps the area of restricted sensing, and the first sensing network element indicates the execution object of the first sensing service to update the area corresponding to the first sensing service, the notification information sent by the first sensing network element may be used to notify that sensing of the first sensing service is rejected in some areas.

In this case, the notification information includes one or more of the following:
- the identification information of the first sensing service, as referenced in the foregoing descriptions of the second identifier;
- the area information 3, where the area information 3 indicates the overlapping area between the area corresponding to the first sensing service and the area of restricted sensing, and in this case, the initiator of the first sensing service may directly learn, based on the area information 3, that sensing of the first sensing service is rejected in the overlapping area; or the area information 3 indicates the area of restricted sensing, and in this case, the initiator of the first sensing service may autonomously determine, based on the area information 3, an area in which sensing of the first sensing service is rejected; and
- a cause value, where the cause value indicates a cause for rejection of the first sensing service, where for example, the cause for rejection is that the area corresponding to the first sensing network element partially overlaps the area of restricted sensing.

For example, the sensing network element may send the notification information to the initiator of the first sensing service through an NEF network element.

It may be understood that, when a plurality of sensing services are affected, the first sensing network element may send notification information to initiators of the plurality of sensing services. For example, the sensing network element may send a message to the NEF network element, where the message includes identifiers (and corresponding area information) of the plurality of affected sensing services. After receiving the message, the NEF network element may separately send the notification information to the initiators of the plurality of sensing services. Alternatively, the sensing network element may send notification information to the NEF network element for each affected sensing service, and the NEF network element forwards the notification information to a corresponding initiator (for example, the NEF network element may process the notification information and then forward the notification information, that is, does not directly forward a message or information).

In this way, through performance of the foregoing S502, a sensing service that is being performed can be controlled based on restricted sensing information, thereby improving sensing security. Through performance of the foregoing S503, an initiator of a sensing service can learn of an execution status of the sensing service in time. It may be understood that, in the foregoing process, S502 may be performed without performing S503 (for example, when the initiator of the first sensing service does not need to learn of the execution status of the service), or S503 may be performed without performing S502 (for example, when no current service is affected), or S502 and S503 may be performed.

### Embodiment 3

In Embodiment 3, a possible implementation of the authorization check in the second aspect is described.

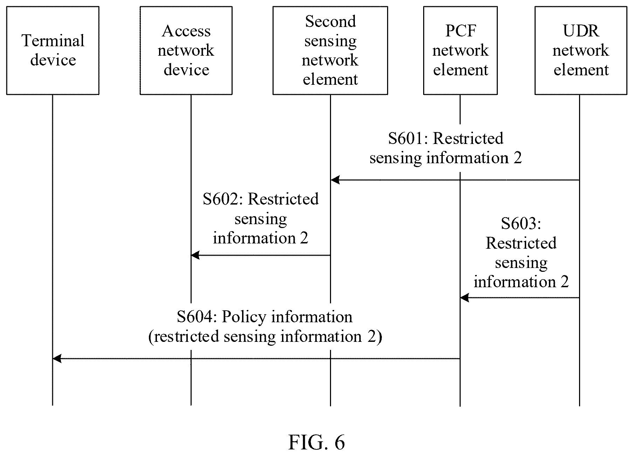

FIG. 6 is a schematic flowchart corresponding to a communication method according to Embodiment 3 of this application. As shown in FIG. 6, the method includes the following steps.

**S601:** A UDR network element sends restricted sensing information 2 to a second sensing network element; and correspondingly, the second sensing network element receives the restricted sensing information 2.

For example, for content included in the restricted sensing information 2, refer to the descriptions in Embodiment 1. The restricted sensing information 2 may be configured for the UDR network element in the manner in Embodiment 1, or may be configured for the UDR network element in another possible manner. This is not specifically limited.

For example, the UDR network element may send the restricted sensing information 2 to the second sensing network element in the manner 2 or the manner 3 in the foregoing Embodiment 2.

**S602:** The second sensing network element sends the restricted sensing information 2 to an access network device, where the restricted sensing information 2 is used to perform an authorization check on a sensing resource requested by a terminal device.

From a perspective of the access network device, after subsequently receiving a sensing resource request initiated by the terminal device, the access network device may perform the authorization check on the sensing resource based on the restricted sensing information 2, so that a sensing service to be performed in the future can be controlled, thereby improving sensing security. For example, when determining that the terminal device is located in an area of restricted sensing, the access network device may reject the sensing resource request. Alternatively, if determining that the terminal device is located in an area of restricted sensing and is in a time period of restricted sensing, the access network device may reject the sensing resource request. Alternatively, if determining that the terminal device is located in an area of restricted sensing and is in a time period of restricted sensing, and the requested sensing resource is used for a sensing service of a specific service type (that is, a service type of restricted sensing), the access network device may reject the sensing resource request. In this way, the terminal device can be prevented from performing the sensing service by requesting the sensing resource from the access network device.

**S603:** The UDR network element sends the restricted sensing information 2 to a PCF network element; and correspondingly, the PCF network element receives the restricted sensing information 2.

For example, the UDR network element may send the restricted sensing information 2 to the PCF network element by using a Nudr_DM_notify message.

**S604:** The PCF network element sends the restricted sensing information 2 to the terminal device, where the restricted sensing information 2 is used by the terminal device to determine whether to initiate a sensing service.

Herein, there are a plurality of manners in which the PCF network element sends the restricted sensing information 2 to the terminal device. For example, the PCF network element sends policy information (for example, sensing control policy information) to the terminal device, where the policy information includes the restricted sensing information 2.

For example, the terminal device may send capability information of the terminal device to the PCF network element. After receiving the capability information, if the PCF network element determines, based on the capability information, that the terminal device supports a sensing function or the terminal device is authorized to perform a sensing service, the PCF network element may send the restricted sensing information 2 to the terminal device. Optionally, if the terminal device does not support a sensing function or the terminal device is not authorized to perform a sensing service, the PCF network element does not need to send the restricted sensing information 2 to the terminal device. When registering with a network, the terminal device may send the capability information of the terminal device to the PCF network element.

For example, the PCF network element may receive location information of the terminal device. If the PCF network element determines, based on the location information of the terminal device, that the terminal device is located in the area of restricted sensing, the PCF network element may send the restricted sensing information 2 to the terminal device. Optionally, if the PCF network element determines, based on the location information of the terminal device, that the terminal device is located outside the area of restricted sensing, the PCF network element may not send the restricted sensing information 2 to the terminal device. Alternatively, if the PCF network element determines, based on the location information of the terminal device, that the terminal device is located outside the area of restricted sensing, but the terminal device is close to the area of restricted sensing (for example, a distance is less than or equal to a set distance threshold), the PCF network element may also send the restricted sensing information 2 to the terminal device.

From a perspective of the terminal device, after the terminal device receives the restricted sensing information 2, when the terminal device is located in the area of restricted sensing, the terminal device may not initiate a sensing service. Alternatively, when the terminal device is located in the area of restricted sensing and is in the time period of restricted sensing, the terminal device does not initiate a sensing service. Alternatively, when the terminal device is located in the area of restricted sensing and is in the time period of restricted sensing, the terminal device does not initiate a sensing service of a specific service type (that is, a service type of restricted sensing). In this way, the terminal device can be prevented from performing an end-side sensing service that does not require network control.

It may be understood that the foregoing descriptions are provided by using an example in which "the first sensing network element sends the restricted sensing information 2 to the access network device". In another possible implementation, the PCF network element may alternatively send the restricted sensing information 2 to the access network device. The foregoing descriptions are provided by using an example in which "the PCF network element sends the restricted sensing information 2 to the terminal device". In another possible implementation, the first sensing network element may alternatively send the restricted sensing information 2 to the terminal device.

In addition, steps S601 and S602 and steps S603 and S604 may be separately implemented, or may be implemented in combination. When steps S601 and S602 and steps S603 and S604 are implemented in combination, steps S601 and S602 may be performed before steps S603 and S604, or may be performed after steps S603 and S604, or may be performed at the same time as steps S603 and S604. This is not specifically limited.

### Embodiment 4

In Embodiment 4, another possible implementation of the authorization check in the second aspect is described.

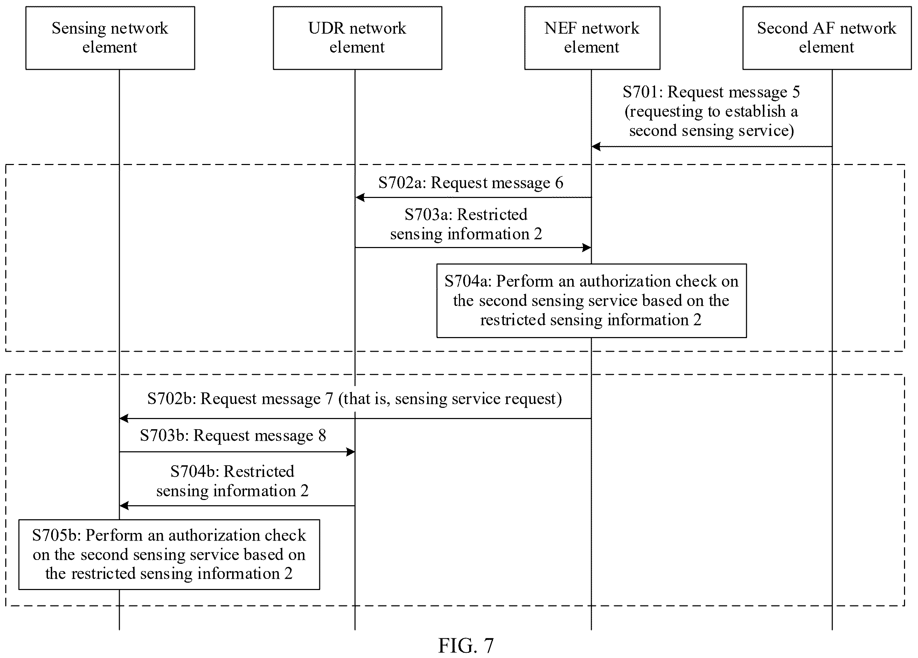

**FIG. 7** is a schematic flowchart corresponding to a communication method according to Embodiment 4 of this application. As shown in FIG. 7, the method includes the following steps.

**S701:** A second AF network element sends a request message 5 to an NEF network element, where the request message 5 is used to request to establish a second sensing service; and correspondingly, the NEF network element receives the request message 5.

Herein, the request message 5 may also be referred to as a sensing service request.

For example, the request message 5 may include sensing requirement information and area information 4. The sensing requirement information may include one or more of the following: requested service type information, requested execution time information, a sensing distance, a sensing speed range, a sensing distance resolution, sensing angle measurement precision, a sensing speed resolution, a sensing quality of service requirement, sensing object identification accuracy, a sensing object identification false alarm rate, sensing data precision, a sensing data update frequency, a sensing dimension, and a sensing feedback manner. The area information 4 indicates an area corresponding to a second sensing service.

Optionally, the request message 5 further includes an identifier of the second AF network element, so that the NEF network element learns of a specific AF network element that initiates the sensing service request.

Optionally, the request message 5 further includes second information, and the second information indicates whether partial area sensing is supported or allowed, that is, whether to reject the second sensing service or continue the second sensing service when the area corresponding to the second sensing service partially overlaps an area of restricted sensing.

Further, after S701, S702a to S704a may be performed, or S702b to S705b may be performed.

**S702a:** The NEF network element sends a request message 6 to a UDR network element, where the request message 6 is used to request restricted sensing information.

For example, the request message 6 may be a Nudr_sensingparameter request.

**S703a:** The UDR network element sends the restricted sensing information, for example, restricted sensing information 2, to the NEF network element based on the request message 6.

For example, the UDR network element may send the restricted sensing information 2 to the NEF network element by using a Nudr_sensingparameter response. For content included in the restricted sensing information 2, refer to the descriptions in Embodiment 1. The restricted sensing information 2 may be configured for the UDR network element in the manner in Embodiment 1, or may be configured for the UDR network element in another possible manner. This is not specifically limited.

**S704a:** The NEF network element performs an authorization check on the second sensing service based on the restricted sensing information 2.

For example, the restricted sensing information 2 indicates only the area of restricted sensing. In this case, if the area corresponding to the second sensing service is in the area of restricted sensing, the NEF network element may reject establishment of the second sensing service; or if the area corresponding to the second sensing service partially overlaps the area of restricted sensing, the NEF network element may authorize establishment of the second sensing service. For example, when the area corresponding to the second sensing service partially overlaps the area of restricted sensing, the NEF network element may authorize, based on the second information in the request message 5, establishment of the second sensing service (if the request message 5 does not include the second information, the NEF network element may reject establishment of the second sensing service). Alternatively, when the area corresponding to the second sensing service partially overlaps the area of restricted sensing, the NEF network element may authorize establishment of the second sensing service according to a local policy.

For another example, the restricted sensing information 2 indicates the area of restricted sensing and a service type of restricted sensing. If the area corresponding to the second sensing service is in the area of restricted sensing, and a service type corresponding to the second sensing service belongs to the service type of restricted sensing, the NEF network element may reject establishment of the second sensing service. Alternatively, if the area corresponding to the second sensing service partially overlaps the area of restricted sensing, and a service type corresponding to the second sensing service belongs to the service type of restricted sensing, the NEF network element may authorize establishment of the second sensing service. Alternatively, if the area corresponding to the second sensing service is in the area of restricted sensing, but a service type corresponding to the second sensing service does not belong to the service type of restricted sensing, the NEF network element may authorize establishment of the second sensing service.

For another example, the restricted sensing information 2 indicates the area of restricted sensing, a service type of restricted sensing, and a time period of restricted sensing. If the area corresponding to the second sensing service is in the area of restricted sensing, a service type corresponding to the second sensing service belongs to the service type of restricted sensing, and requested execution time is within the time period of restricted sensing, the NEF network element may reject establishment of the second sensing service. Alternatively, if the area corresponding to the second sensing service partially overlaps the area of restricted sensing, a service type corresponding to the second sensing service belongs to the service type of the restricted sensing, but requested execution time is not within the time period of restricted sensing, the NEF network element may authorize establishment of the second sensing service.

It may be understood that the foregoing describes some possible cases of the authorization check, but not all cases are enumerated. For some cases that are not provided, derivation may be performed with reference to the foregoing determining logic, and details are not described again.

In addition, if the NEF network element determines to authorize establishment of the second sensing service, the NEF network element may interact with a sensing network element to continue to initiate a sensing procedure; or if the NEF network element determines to reject establishment of the second sensing service, a subsequent sensing procedure does not need to be performed. Optionally, the NEF network element may send a sensing service response to the second AF network element, where the sensing service response may include authorization result information, and the authorization result information indicates that establishment of the second sensing service is rejected or establishment of the second sensing service is authorized. For a case in which sensing is authorized in some areas, the sensing service response may further include area information 5, and the area information 5 indicates the area of restricted sensing, indicates specific areas in which sensing of the second sensing service is rejected, or indicates areas in which sensing of the second sensing service is authorized.

**S702b:** The NEF network element sends a request message 7 to the sensing network element, in other words, the NEF network element initiates a sensing service request to the sensing network element.

For example, the request message 7 may include sensing requirement information and area information 6 (for a relationship between the area information 6 and the area information 4, refer to the relationship between the area information 2 and the area information 1 in Embodiment 1). Optionally, the request message 7 further includes second information, and the second information indicates whether partial area sensing is supported or allowed.

In other words, the NEF network element may process the request message 6 to obtain the request message 7, and forward the request message 7 to the sensing network element.

**S703b:** The sensing network element sends a request message 8 to the UDR network element, where the request message 8 is used to request restricted sensing information.

For example, the request message 8 may be a Nudr_sensingparameter request.

**S704b:** The UDR network element sends the restricted sensing information, for example, the restricted sensing information 2, to the sensing network element based on the request message 8.

For example, the UDR network element may send the restricted sensing information 2 to the sensing network element by using a Nudr_sensingparameter response.

For example, for content included in the restricted sensing information 2, refer to the descriptions in Embodiment 1. The restricted sensing information 2 may be configured for the UDR network element in the manner in Embodiment 1, or may be configured for the UDR network element in another possible manner. This is not specifically limited.

**S705b:** The sensing network element performs an authorization check on the second sensing service based on the restricted sensing information 2.

It may be understood that, when the sensing network element obtains the restricted sensing information 2 (for example, obtains the restricted sensing information 2 in the manner in S501 in Embodiment 2) and stores the restricted sensing information 2, the sensing network element may perform the authorization check on the second sensing service based on the stored restricted sensing information 2, that is, S703b and S704b may not be performed.

For example, for an implementation in which the sensing network element performs the authorization check on the second sensing service, refer to the descriptions in **S704a** in which the NEF network element performs the authorization check on the second sensing service.

Optionally, the sensing network element may send a sensing service response to the second AF network element through the NEF network element. For content included in the sensing service response, refer to the foregoing descriptions.

According to the foregoing method, an authorization check may be performed on an initiated sensing service request based on restricted sensing information, to improve sensing security.

### Embodiment 5

In Embodiment 5, a possible implementation of configuring exposed sensing information in the third aspect is described.

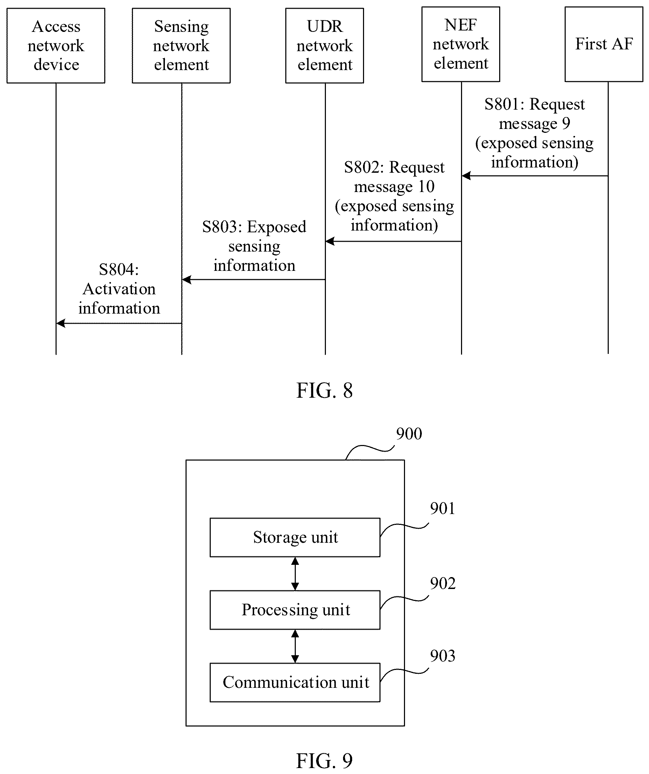

**FIG. 8** is a schematic flowchart corresponding to a communication method according to Embodiment 5 of this application. As shown in FIG. 8, the method includes the following steps.

**S801:** A first AF network element sends a request message 9 to an NEF network element, where the request message 9 includes exposed sensing information; and correspondingly, the NEF network element receives the request message 9.

For example, for areas in which sensing services are turned off or disabled, when determining to enable sensing permission for these areas, the first AF network element may send the request message 9 to the NEF network element. The request message 9 may also be referred to as a sensing exposure configuration request or sensing service activation information.

The exposed sensing information may indicate an area of sensing exposure. Optionally, the exposed sensing information further indicates a service type of sensing exposure and/or a time period of sensing exposure. For a specific implementation of "the exposed sensing information indicates the area of sensing exposure, the service type of sensing exposure, and the time period of sensing exposure", refer to the descriptions of "the restricted sensing information indicates the area of restricted sensing, the service type of restricted sensing, and the time period of restricted sensing" in Embodiment 1.

**S802:** The NEF network element sends a request message 10 to a UDR network element based on the request message 9, where the request message 10 includes the exposed sensing information; and correspondingly, the UDR network element receives the request message 10, and stores the exposed sensing information.

For example, the request message 10 may be a Nudr_parameterProvision create request.

Optionally, after receiving the request message 9, the NEF network element may first perform an authorization check, and send the request message 10 to the UDR network element after the authorization check succeeds. That the NEF network element performs the authorization check may be as follows: The NEF network element checks, according to a local policy, whether the first AF network element is authorized to serve as an entity for initiating the sensing exposure configuration request. Alternatively, the NEF network element requests authorization check information from a UDM network element, and determines, based on the authorization check information, whether the AF network element is authorized to serve as an entity for initiating the sensing exposure configuration request.

Optionally, after receiving the request message 10, the UDR network element may further perform an authorization check according to a local policy, for example, check, according to the local policy, the exposed sensing information requested by the sensing exposure configuration request. The authorization check performed by the NEF may be understood as a coarse-grained authorization check, and the authorization check performed by the UDR network element may be understood as a fine-grained authorization check.

Optionally, the UDR network element may send a response message (which, for example, may be referred to as a Nudr_parameterProvision create response message) to the NEF network element. Correspondingly, after receiving the response message, the NEF network element may send a sensing exposure configuration response to the AF network element.

S801 and S802 may be understood as a configuration process of the exposed sensing information, and the configuration process of the exposed sensing information and the configuration process of the restricted sensing information may be mutually referenced.

Optionally, the method further includes the following steps.

**S803:** The UDR network element sends the exposed sensing information to a sensing network element; and correspondingly, the sensing network element receives the exposed sensing information.

For example, the UDR network element may send the sensing information to the sensing network element in the manner 2 or the manner 3 in Embodiment 2. In addition, the UDR network element may send the exposed sensing information to the sensing network element by using a Nudr_DM_notification message.

**S804:** The sensing network element sends activation information to an access network device, where the activation information indicates the access network device to activate a sensing function, and the access network device is located in the area of sensing exposure.

For example, the sensing network element may send, based on the area of sensing exposure and location information of access network devices, the activation information to all access network devices in the area of sensing exposure.

Optionally, the activation information includes sensing configuration information, where the sensing configuration information includes frequency information used to perform a sensing operation in the area of sensing exposure. Alternatively, the activation information includes address information, where the address information is used by the access network device to obtain sensing configuration information. Alternatively, after receiving the activation information, the access network device actively requests sensing configuration information from a configuration network element (for example, an OAM network element).

For example, the sensing network element may directly send the activation information to the access network device (for example, there is an interface between the sensing network element and the access network device). Alternatively, the sensing network element may send the activation information to the access network device through another possible network element (for example, an AMF network element).

In addition, after activating the sensing function of the access network device, the sensing network element may further trigger establishment of a sensing data transmission tunnel, so that the access network device can subsequently upload sensing data on the sensing data transmission tunnel.

It may be understood that, similar to the restricted sensing information, after the exposed sensing information is configured, an authorization check may also be performed, based on the exposed sensing information, on a sensing service to be performed in the future. For details, refer to the descriptions in Embodiment 3 and Embodiment 4.

For Embodiment 1 to Embodiment 5, it may be understood as follows:
(1) In Embodiment 1 to Embodiment 5, when an AF network element communicates with another core network element (for example, a UDR network element) through an NEF network element, the NEF network element may process forwarded information. For example, the NEF network element converts geographical area information sent by the AF into information used by an operator network to identify an area, and sends the information to the another core network element. Alternatively, the NEF network element converts, into geographical area information, information that is used by an operator network to identify an area and that is sent by the another core network element, and sends the geographical area information to another AF network element. Certainly, some other possible processing may be further performed. This is not limited in embodiments of this application.
(2) In Embodiment 1 to Embodiment 5, "sending information to... (a network element or device)" may be understood as that a destination end of the information is the network element or device, and may include directly or indirectly sending the information to the network element or device. "Receiving information from... (a network element or device)" may be understood as that a source end of the information is the network element or device, and may include directly or indirectly receiving the information from the network element or device. Information may undergo necessary processing, for example, a format change, between a source end and a destination end of information sending. However, the destination end may understand valid information from the source end. Similar expressions in this application may be understood similarly, and details are not described herein again.
(3) Area information in Embodiment 1 to Embodiment 5 may alternatively be embodied in another manner. For example, for an area of restricted sensing, area information may include an identifier of one or more access network devices, which indicates that an area served by the one or more access network devices is the area of restricted sensing, in other words, the one or more access network devices are prohibited from performing a sensing service. In this case, when performing restricted processing on a sensing service that is being performed, a sensing network element may directly send indication information to the one or more access network devices in a targeted manner. Alternatively, when performing an authorization check on a sensing service to be performed in the future, a sensing network element may directly send restricted sensing information to the one or more access network devices in a targeted manner.
(4) Step numbers in the flowcharts described in Embodiment 1 to Embodiment 5 are merely an example of an execution procedure, and do not constitute a limitation on an execution sequence of the steps. In embodiments of this application, there is no strict execution sequence between steps that do not have a time sequence dependency relationship with each other. Not all the steps shown in the flowcharts are mandatory steps. Some steps may be deleted from the flowcharts based on an actual requirement, or another possible step may be added to the flowcharts based on an actual requirement.
(5) Embodiment 1 to Embodiment 5 may be separately implemented, or a plurality of embodiments thereof may be implemented in combination. For example, Embodiment 1 and Embodiment 2 are implemented in combination, or Embodiment 1 and Embodiment 3 are implemented in combination, or Embodiment 1 and Embodiment 4 are implemented in combination, or Embodiment 1, Embodiment 2, and Embodiment 3 are implemented in combination. Examples are not listed one by one. In addition, the foregoing focuses on describing differences between different embodiments, different implementations, and different examples. For content other than the differences, different embodiments may be mutually referenced; or in a same embodiment, different implementations or different examples may also be mutually referenced.

The foregoing mainly describes the solutions provided in embodiments of this application from a perspective of interaction between network elements. It may be understood that, to implement the foregoing functions, the network elements may include corresponding hardware structures and/or software modules for performing the functions. A person skilled in the art should easily be aware that, in combination with units and algorithm steps of the examples described in the embodiments disclosed in this specification, embodiments of this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the network device may be divided into functional units based on the foregoing method examples. For example, each functional unit may be obtained through division based on each corresponding function, or two or more functions may be integrated into one unit. The integrated unit may be implemented in a form of hardware, or may be implemented in a form of a software functional unit.

When the integrated unit is used, FIG. 9 is a possible example block diagram of an apparatus according to an embodiment of this application. As shown in FIG. 9, the apparatus 900 may include a processing unit 902 and a communication unit 903. The processing unit 902 is configured to control and manage an action of the apparatus 900. The communication unit 903 is configured to support communication between the apparatus 900 and another device. Optionally, the communication unit 903 is also referred to as a transceiver unit (or a transceiver machine), and may include a receiving unit and/or a sending unit. The receiving unit and the sending unit are respectively configured to perform a receiving operation and a sending operation. The apparatus 900 may further include a storage unit 901, configured to store program code and/or data of the apparatus 900.
(1) The apparatus 900 may be the sensing network element in the foregoing embodiments, or may be a component (for example, a circuit or chip) disposed in the sensing network element. The processing unit 902 may support the apparatus 900 in performing actions of the sensing network element in the foregoing method examples. Alternatively, the processing unit 902 mainly performs internal actions of the sensing network element in the method examples, and the communication unit 903 may support communication between the apparatus 900 and another device.

For example, in an embodiment, the communication unit 903 is configured to: receive restricted sensing information, where the restricted sensing information includes first area information, and the first area information indicates an area of restricted sensing; and send indication information to an execution object of a first sensing service or an access and mobility management function network element based on the restricted sensing information, where the indication information indicates to perform restricted processing on the first sensing service, and an area corresponding to the first sensing service overlaps the area of restricted sensing.

In a possible design, the restricted sensing information further includes one or more of the following: service type information, where the service type information indicates a service type of restricted sensing; and time information, where the time information indicates a time period of restricted sensing.

In a possible design, a service type corresponding to the first sensing service belongs to the service type of restricted sensing.

In a possible design, the indication information includes one or more of the following: identification information of the first sensing service; restricted processing manner information, where the restricted processing manner information indicates to terminate the first sensing service, pause the first sensing service, or update the area corresponding to the first sensing service; the first area information; the service type information, where the service type information indicates the service type of restricted sensing; and the time information, where the time information indicates the time period of restricted sensing.

In a possible design, the communication unit 903 is further configured to send notification information to an initiator of the first sensing service, where the notification information is used to notify the initiator that the first sensing service is rejected.

In a possible design, the notification information includes one or more of the following: the identification information of the first sensing service; the first area information; second area information, where the second area information indicates an overlapping area between the area corresponding to the first sensing service and the area of restricted sensing; and a cause value, where the cause value indicates a cause for rejection of the first sensing service.

In a possible design, the communication unit 903 is further configured to: send the restricted sensing information to an access network device, where the restricted sensing information is used to perform an authorization check on a sensing resource requested by a terminal device.

(2) The apparatus 900 may be the PCF network element in the foregoing embodiments, or may be a component (for example, a circuit or chip) disposed in the PCF network element. The processing unit 902 may support the apparatus 900 in performing actions of the PCF network element in the foregoing method examples. Alternatively, the processing unit 902 mainly performs internal actions of the PCF network element in the method examples, and the communication unit 903 may support communication between the apparatus 900 and another device.

For example, in an embodiment, the communication unit 903 is configured to: receive restricted sensing information, where the restricted sensing information includes first area information, and the first area information indicates an area of restricted sensing; and send the restricted sensing information to a terminal device, where the restricted sensing information is used by the terminal device to determine whether to initiate a sensing service.

In a possible design, the restricted sensing information further includes one or more of the following: service type information, where the service type information indicates a service type of restricted sensing; and time information, where the time information indicates a time period of restricted sensing.

In a possible design, the communication unit 903 is further configured to: receive capability information of the terminal device, where the capability information indicates that the terminal device supports a sensing function or that the terminal device is authorized to perform a sensing service.

In a possible design, the communication unit 903 is further configured to: receive location information of the terminal device; and determine, based on the location information of the terminal device, to send the restricted sensing information to the terminal device.

(3) The apparatus 900 may be the NEF network element in the foregoing embodiments, or a component (for example, a circuit or chip) disposed in the NEF network element. The processing unit 902 may support the apparatus 900 in performing actions of the NEF network element in the foregoing method examples. Alternatively, the processing unit 902 mainly performs internal actions of the NEF network element in the method examples, and the communication unit 903 may support communication between the apparatus 900 and another device.

For example, in an embodiment, the communication unit 903 is configured to: receive first request information, where the first request information is used to request to establish a second sensing service; obtain restricted sensing information, where the restricted sensing information includes first area information, and the first area information indicates an area of restricted sensing; and perform an authorization check on the second sensing service based on the area of restricted sensing and an area corresponding to the second sensing service.

In a possible design, a fourth request message includes third area information, and the third area information indicates the area corresponding to the second sensing service.

In a possible design, the processing unit 902 is configured to: when the area corresponding to the second sensing service is in the area of restricted sensing, reject establishment of the second sensing service.

In a possible design, the processing unit 902 is configured to: when the area corresponding to the second sensing service partially overlaps the area of restricted sensing, authorize establishment of the second sensing service.

In a possible design, the first request information includes second information, and the second information indicates that the second sensing service is supported or allowed when the area corresponding to the second sensing service partially overlaps the area of restricted sensing.

In a possible design, the restricted sensing information includes service type information, where the service type information indicates a service type of restricted sensing; and a service type corresponding to the second sensing service belongs to the service type of restricted sensing.

In a possible design, the restricted sensing information further includes time information, where the time information indicates a time period of restricted sensing; and the fourth request information further includes execution time information, the execution time information indicates execution time of the second sensing service, and the execution time of the second sensing service is in the time period of restricted sensing.

It should be understood that division into the units of the foregoing apparatus is merely logical function division. During actual implementation, some or all units may be integrated into one physical entity, or the units may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated together, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in a processor element, or may be implemented in a form of software invoked by a processing element.

In an example, a unit in any one of the foregoing apparatuses may be one or more integrated circuits configured to implement the foregoing methods, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these forms of integrated circuits. For another example, when the units in the apparatus are implemented in a form of scheduling a program by a processing element, the processing element may be a processor, for example, a general-purpose central processing unit (central processing unit, CPU) or another processor that can invoke the program. For another example, these units may be integrated and implemented in a form of a system-on-a-chip (system-on-a-chip, SoC).

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in the manner of the chip, the sending unit is an interface circuit that is of the chip and that is configured to send a signal to another chip or apparatus.

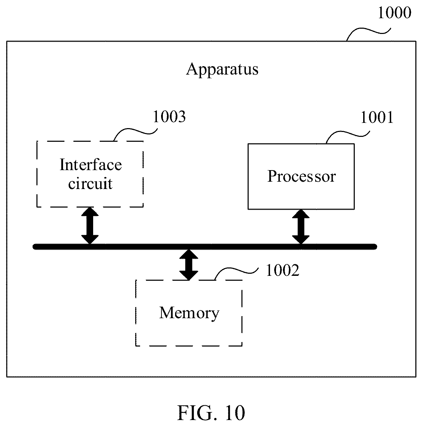

FIG. 10 is a diagram of a structure of an apparatus according to an embodiment of this application. The apparatus 1000 may be a network element in the foregoing embodiments, for example, a sensing network element, a PCF network element, or an NEF network element, and is configured to implement a function of the network element in the foregoing embodiments.

As shown in FIG. 10, the apparatus 1000 may include a processor 1001, a memory 1002, and an interface circuit 1003. The processor 1001 may be configured to: process a communication protocol and communication data, and control the apparatus 1000. The memory 1002 may be configured to store a program and data. The processor 1001 may perform, based on the program, the method performed by the apparatus 1000 in embodiments of this application. The interface circuit 1003 may be used by the apparatus 1000 to communicate with another device. The communication may be wired communication or wireless communication. The interface circuit may be, for example, a service-based interface.

The memory 1002 may alternatively be externally connected to the apparatus 1000. In this case, the apparatus 1000 may include the interface circuit 1003 and the processor 1001. The interface circuit 1003 may alternatively be externally connected to the apparatus 1000. In this case, the apparatus 1000 may include the memory 1002 and the processor 1001. When both the interface circuit 1003 and the memory 1002 are externally connected to the apparatus 1000, the apparatus 1000 may include the processor 1001.

The apparatus 1000 shown in FIG. 10 can implement processes of the apparatus 1000 in the foregoing method embodiments. Operations and/or functions of modules in the apparatus 1000 shown in FIG. 10 are separately used to implement corresponding procedures in the method embodiments. For details, refer to the descriptions in the method embodiments. To avoid repetition, detailed descriptions are properly omitted herein.

The terms "system" and "network" may be used interchangeably in embodiments of this application. "At least one" means one or more, and "a plurality of" means two or more. "And/or" describes an association relationship between associated objects and represents that three relationships may exist. For example, A and/or B may represent the following cases: Only A exists, both A and B exist, and only B exists, where A and B may be singular or plural. The character "/" generally indicates an "or" relationship between associated objects. "At least one of the following items (pieces)" or a similar expression thereof refers to any combination of these items, including any combination of singular items (pieces) or plural items (pieces). For example, "at least one of A, B, or C" includes A, B, C, AB, AC, BC, or ABC, and "at least one of A, B, and C" may also be understood as including A, B, C, AB, AC, BC, or ABC. In addition, unless otherwise specified, ordinal numbers such as "first" and "second" mentioned in embodiments of this application are used to distinguish between a plurality of objects, but are not used to limit a sequence, a time sequence, priorities, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, an optical memory, and the like) that include computer-usable program code.

This application is described with reference to the flowcharts and/or the block diagrams of the method, the device (system), and the computer program product in this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specified function in one or more processes in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specified function in one or more processes in the flowcharts and/or in one or more blocks in the block diagrams.

These computer program instructions may alternatively be loaded onto a computer or another programmable data processing device, so that a series of operation steps are performed on the computer or the another programmable device, thereby generating computer-implemented processing. Therefore, the instructions executed on the computer or the another programmable device provide steps for implementing a specified function in one or more processes in the flowcharts and/or in one or more blocks in the block diagrams.

Clearly, a person skilled in the art can make various modifications and variations to this application without departing from the spirit and scope of this application. This application is intended to cover these modifications and variations of this application provided that they fall within the scope of protection defined by the claims of this application and their equivalent technologies.

## Claims

1. A communication method, wherein the method comprises:
receiving restricted sensing information, wherein the restricted sensing information comprises first area information, and the first area information indicates an area of restricted sensing; and
sending indication information to an execution object of a first sensing service or an access and mobility management function network element based on the restricted sensing information, wherein the indication information indicates to perform restricted processing on the first sensing service, and an area corresponding to the first sensing service overlaps the area of restricted sensing.

2. The method according to claim 1, wherein the restricted sensing information further comprises one or more of the following:
service type information, wherein the service type information indicates a service type of restricted sensing; and
time information, wherein the time information indicates a time period of restricted sensing.

3. The method according to claim 2, wherein a service type corresponding to the first sensing service belongs to the service type of restricted sensing.

4. The method according to any one of claims 1 to 3, wherein the indication information comprises one or more of the following:
identification information of the first sensing service;
restricted processing manner information, wherein the restricted processing manner information indicates to terminate the first sensing service, pause the first sensing service, or update the area corresponding to the first sensing service;
the first area information;
the service type information, wherein the service type information indicates the service type of restricted sensing; and
the time information, wherein the time information indicates the time period of restricted sensing.

5. The method according to any one of claims 1 to 4, wherein the method further comprises:
sending notification information to an initiator of the first sensing service, wherein the notification information is used to notify the initiator that the first sensing service is rejected.

6. The method according to claim 5, wherein the notification information comprises one or more of the following:
the identification information of the first sensing service;
the first area information;
second area information, wherein the second area information indicates an overlapping area between the area corresponding to the first sensing service and the area of restricted sensing; and
a cause value, wherein the cause value indicates a cause for rejection of the first sensing service.

7. The method according to any one of claims 1 to 6, wherein the method further comprises:
sending the restricted sensing information to an access network device, wherein the restricted sensing information is used to perform an authorization check on a sensing resource requested by a terminal device.

8. A communication method, wherein the method comprises:
receiving restricted sensing information, wherein the restricted sensing information comprises first area information, and the first area information indicates an area of restricted sensing; and
sending the restricted sensing information to a terminal device, wherein the restricted sensing information is used by the terminal device to determine whether to initiate a sensing service.

9. The method according to claim 8, wherein the restricted sensing information further comprises one or more of the following:
service type information, wherein the service type information indicates a service type of restricted sensing; and
time information, wherein the time information indicates a time period of restricted sensing.

10. The method according to claim 8 or 9, wherein the method further comprises:
receiving capability information of the terminal device, wherein the capability information indicates that the terminal device supports a sensing function or that the terminal device is authorized to perform a sensing service.

11. The method according to claim 8 or 9, wherein the method further comprises:
receiving location information of the terminal device; and
determining, based on the location information of the terminal device, to send the restricted sensing information to the terminal device.

12. A communication method, wherein the method comprises:
receiving first request information, wherein the first request information is used to request to establish a second sensing service;
obtaining restricted sensing information, wherein the restricted sensing information comprises first area information, and the first area information indicates an area of restricted sensing; and
performing an authorization check on the second sensing service based on the area of restricted sensing and an area corresponding to the second sensing service.

13. The method according to claim 12, wherein performing the authorization check on the second sensing service based on the area of restricted sensing and the area corresponding to the second sensing service comprises:
when the area corresponding to the second sensing service is in the area of restricted sensing, rejecting establishment of the second sensing service.

14. The method according to claim 12, wherein performing the authorization check on the second sensing service based on the area of restricted sensing and the area corresponding to the second sensing service comprises:
when the area corresponding to the second sensing service partially overlaps the area of restricted sensing, authorizing establishment of the second sensing service.

15. The method according to any one of claims 12 to 14, wherein the first request information comprises second information, and the second information indicates that the second sensing service is supported or allowed when the area corresponding to the second sensing service partially overlaps the area of restricted sensing.

16. The method according to any one of claims 12 to 15, wherein the restricted sensing information comprises service type information, and the service type information indicates a service type of restricted sensing; and
a service type corresponding to the second sensing service belongs to the service type of restricted sensing.

17. A communication system, wherein the communication system comprises a data storage network element and a sensing network element;
the data storage network element is configured to: receive second request information from an application function network element, and store restricted sensing information, wherein the second request information is used to request to configure the restricted sensing information, the second request information comprises the restricted sensing information, the restricted sensing information comprises first area information, and the first area information indicates an area of restricted sensing;
the data storage network element is further configured to send the restricted sensing information to the sensing network element, wherein a service area of the sensing network element overlaps the first area, or an area corresponding to a sensing service established by the sensing network element overlaps the first area; and
the sensing network element is further configured to receive the restricted sensing information.

18. A communication apparatus, comprising a processor, wherein the processor is coupled to a memory, the memory stores a computer program, and the processor is configured to invoke the computer program in the memory to enable the communication apparatus to perform the method according to any one of claims 1 to 16.

19. A computer-readable storage medium, wherein the storage medium stores a computer program or instructions; and when the computer program or the instructions are executed by a computer, the method according to any one of claims 1 to 16 is implemented.

20. A computer program product, wherein when a computer reads and executes the computer program product, the computer is enabled to perform the method according to any one of claims 1 to 16.
